# EUROPÄISCHE PATENTANMELDUNG

(11) **EP 3 254 545 A1**
(43) Veröffentlichungstag der Anmeldung: **13.12.2017**
(21) Anmeldenummer: 17401056.1
(22) Anmeldetag: 23.05.2017
(51) Int. Cl.: A01B 59/00, A01B 63/24

(54) **EINSTELLVORRICHTUNG**

(30) Priorität: 09.06.2016 DE 102016110629
(71) Anmelder: Amazonen-Werke H. Dreyer GmbH & Co. KG, 49205 Hasbergen (DE)
(72) Erfinder: Schröder, Olaf, 27798 Hude (DE)

(57) **Zusammenfassung**

Einstellvorrichtung (8) für eine höhenverstellbare Aufhängung von Bodenbearbeitungswerkzeugen (5) eines zumindest einen Rahmen (7) aufweisenden landwirtschaftlichen Gerätes, wobei die Einstellvorrichtung (8) zumindest eine linear verstellbare Verbindung mit zumindest einer Linearführungseinheit (9) zwischen dem Rahmen (7) und den Bodenbearbeitungswerkzeugen (5) aufweist, wobei die Linearführungseinheit (9) zumindest eine mit zahnartige Aussparungen (11) versehene und in einer Schiebeführung (10) geführte Zahnstange (12) und zumindest ein in die zahnartigen Aussparungen (11) der Zahnstange (12) eingreifendes mittels einer Bedienungsmittels verdrehbares Zahnradritzel (13) aufweist, wobei der Linearführungseinheit (9) zumindest eine Verriegelungsvorrichtung (14) zur Festsetzung der Linearführungseinheit (9) aufweist. Um eine verbesserte Verriegelungseinrichtung zur Verriegelung der Zahnstange (12) in den in der Führungseinrichtung schaffen, ist vorgesehen, dass die Verriegelungseinrichtung (14) zumindest ein in ihrer Verriegelungsposition in die zahnartigen Aussparungen (11) eingreifendes zahnartiges Verriegelungselement (15) aufweist.

## Beschreibung

Die Erfindung betrifft eine Einstellvorrichtung gemäß des Oberbegriffes des Patentanspruches 1.

Eine derartige Einstellvorrichtung ist in der EP 1 060 649 A2 beschrieben. Diese Einstellvorrichtung ist für eine höhenverstellbare Aufhängung von Bodenbearbeitungswerkzeugen an einen Rahmen eines landwirtschaftlichen Gerätes vorgesehen. Jede Einstellvorrichtung weist eine linear verstellbare Verbindung mit zumindest einer Linearführungseinheit zwischen dem Rahmen und den Bodenbearbeitungswerkzeugen auf. Die Linearführungseinheit weist eine mit zahnartigen Aussparungen versehene und in einer Schiebeführung geführte Zahnstange und ein in die zahnartigen Aussparungen der Zahnstange eingreifendes mittels einer Bedienungsmittels verdrehbares Zahnradritzel auf. Dieses Bedienungsmittel kann beispielsweise eine Kurbel oder ein motorisches Antriebselement sein, um das Zahnrad in Drehung zu versetzen, so dass die Zahnstange in der Schiebeführung verschoben wird. Desweiteren weist die Linearführungseinheit eine Verriegelungsvorrichtung zur Festsetzung der Linearführungseinheit auf, wenn die Zahnstange in der Schiebeführung in die richtige Position gebracht ist. Hierzu muss ein Verriegelungsbolzen durch zur Deckung gebrachte Aussparungen in der Zahnstange und in der Schiebeführung gesteckt werden.

Diese Ausgestaltung der Verriegelung ist insbesondere nach längerem Gebrauch störanfällig.

Der Erfindung liegt die Aufgabe zu Grunde, eine verbesserte Verriegelungseinrichtung zur Verriegelung der Zahnstange in den in der Führungseinrichtung schaffen.

Diese Aufgabe der erfindungsgemäß dadurch gelöst, dass die Verriegelungseinrichtung zumindest ein in ihrer Verriegelungsposition in die zahnartigen Aussparungen eingreifendes zahnartiges Verriegelungselement aufweist.

Infolge dieser Maßnahme wird eine sehr einfache und robuste ausgestaltete Verriegelungseinheit zwischen der Zahnstange und der Schiebeführung geschaffen. Durch ein einfaches Eingreifen des Verriegelungselemente in die zahnartigen Aussparungen wird eine Verriegelung der Zahnstange gegenüber der Schiebeführung der Linearführungseinheit in der vorgesehenen Position erreicht.

In einfacher Weise lässt sich die Verriegelung dadurch umsetzen, dass das zahnartige Verriegelungselement an einem mit der Schiebeführung schwenkbar verbundenem Schwenkhebel angeordnet ist. Somit lässt sich der zahnartige Verriegelungsbereich des Verriegelungselementes einfach in die zahnartigen Aussparungen der Zahnstange einschwenken.

Eine einfache Festsetzung des Verriegelungselementes in den zahnartigen Aussparungen in Verriegelungsposition wird dadurch erreicht, dass dem Schwenkhebel ein als mittels eines Bedienungselementes verdrehbarer Exzenter ausgebildeter Verriegelungsmechanismus zum Verbringen des Schwenkhebels zum Eingreifen der zahnartigen Verriegelungselemente in die zahnartigen Aussparungen der Zahnstange in Verriegelungsposition der Linearführungseinheit zugeordnet ist. Mittels des verdrehbaren Exenters wird das Verriegelungselement gegenüber der Zahnstange in der Verriegelungsposition verriegelt.

Weitere Einzelheiten der Erfindung sind der Beispielsbeschreibung und den Zeichnungen zu entnehmen. Die Zeichnungen zeigen
- Fig.1: eine aus einem Bodenbearbeitungsgerät und einer Sämaschine bestehende Bestellkombination mit einem über eine Einstellvorrichtung an der Rückseite des Rahmens der Sämaschine angeordnete als Bodenbearbeitungswerkzeug ausgebildete Striegeleinheit in perspektivischer Ansicht von hinten,

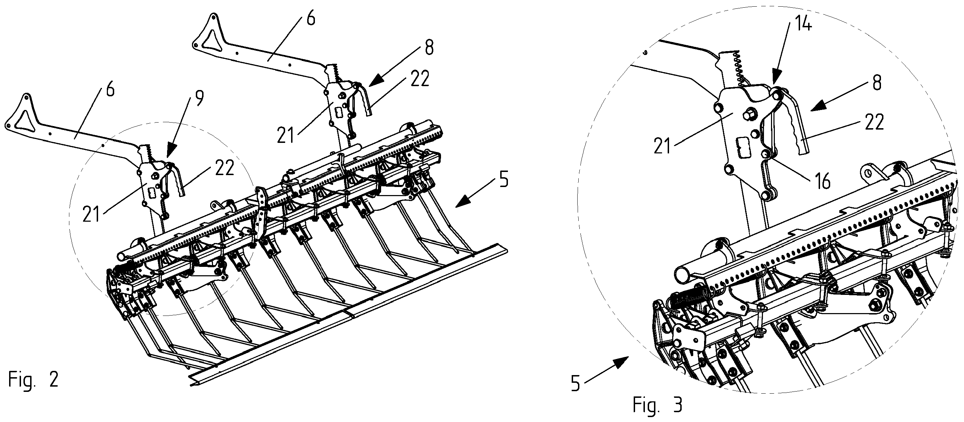

- Fig.2: die Striegeleinheit mit der zugeordneten Einstellvorrichtung in der Darstellungsweise gemäß Fig.1,
- Fig.3: die Einstellvorrichtung für die Striegeleinheit ausschnittsweise im vergrößerten Maßstab in der Darstellungsweise gemäß Fig.2,
- Fig.4: die Einstellvorrichtung mit einer hochgezogenen Einstellposition für die Striegeleinheit in vergrößertem Maßstab und in Seitenansicht,
- Fig.5: die Einstellvorrichtung mit einer abgesenkten Einstellposition für die Striegeleinheit in vergrößertem Maßstab und in Seitenansicht,
- Fig.6: die Einstellvorrichtung in der Einstellung und Darstellungsweise gemäß Fig.5, jedoch mit ausgeblendeter Seitenplatte der Schiebeführung in verriegelter Position der Zahnstange in der Schiebeführung in Seitenansicht und
- Fig.7: die Einstellvorrichtung in der Einstellung und Darstellungsweise gemäß Fig.5, jedoch mit ausgeblendeter Seitenplatte der Schiebeführung in verriegelter Position der Zahnstange in der Schiebeführung in Seitenansicht.

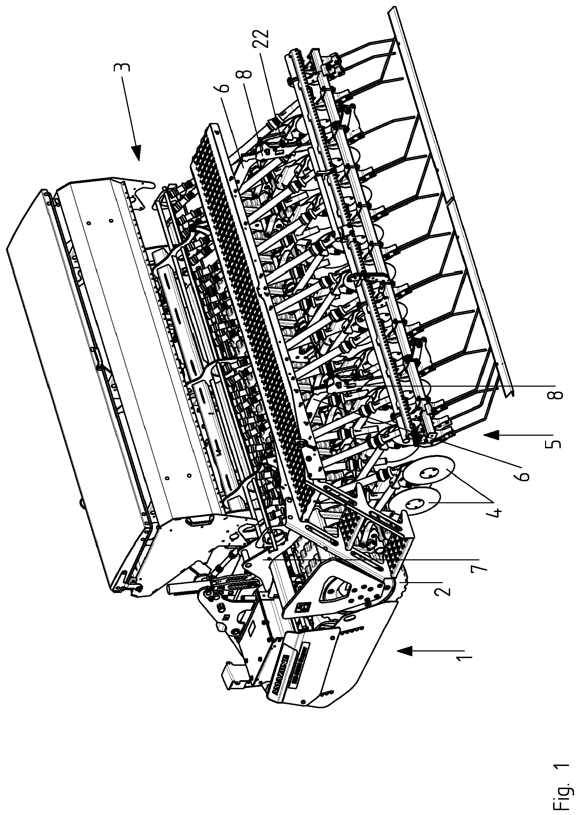

Das landwirtschaftliche Gerät ist als Bestellkombination ausgebildetet. Die Bestellkombination gemäß Fig.1 besteht aus dem motorisch angetriebenen als Kreiselegge ausgebildeten Bodenbearbeitungsgerät 1, der hinter den Bodenbearbeitungswerkzeugen der Kreiselegge 1 angeordneten Nachlaufwalze 2, der auf der Nachlaufwalze 2 und dem Bodenbearbeitungsgerät 1 aufgesattelten Sämaschine 3 mit den hinter der Nachlaufwalze 2 angeordneten Säscharen 4 und dem hinter den Säscharen 4 als weiteres Bodenbearbeitungswerkzeug ausgebildeten Saatstriegel 5. Der Saatstriegel 5 ist mittels Verbindungsarmen 6 an dem Rahmen 7 der Bestellkombination angeordnet. Den Verbindungsarmen 6 ist eine Einstellvorrichtung 8 für die höhenverstellbare Aufhängung des Saatstriegels 5 an dem Rahmen 7 des landwirtschaftlichen Gerätes zugeordnet.

Die Einstellvorrichtung 8 bildet eine linear verstellbare Verbindung zwischen dem Rahmen 7 und dem Saatstriegel 5. Die Einstellvorrichtung 8 weist die Linearführungseinheit 9 zwischen dem Rahmen 7 und den Bodenbearbeitungswerkzeugen 5 auf. Die Linearführungseinheit 9 weist die Schiebeführung 10 auf. In dieser Schiebeführung 10 ist die mit zahnartigen Aussparungen 11 versehene Zahnstange 12 geführt. Weiterhin weist die Linearführungseinheit 8 ein in die zahnartigen Aussparungen 11 der Zahnstange 12 eingreifendes verdrehbares Zahnradritzel 13 auf. Mittels einer nicht dargestellten als Handkurbel ausgebildeten Bedienungsmittel lässt sich das Zahnradritzel 13 drehen und somit wird die Zahnstange 12 in der Schiebeführung 10 der Linearführungseinheit 9 je nach Drehrichtung des Zahnradritzels 13 nach oben oder unten zur Höhenverstellung des als Saatstriegel 5 ausgebildeten Bodenbearbeitungswerkzeuges verschoben. Alternativ kann dem Zahnradritzel 13 auch ein motorischer Antrieb zugeordnet sein, mit dem sich das Zahnradritzel 13 verdrehen und somit die Zahnstange 12 entsprechend verschieben lässt.

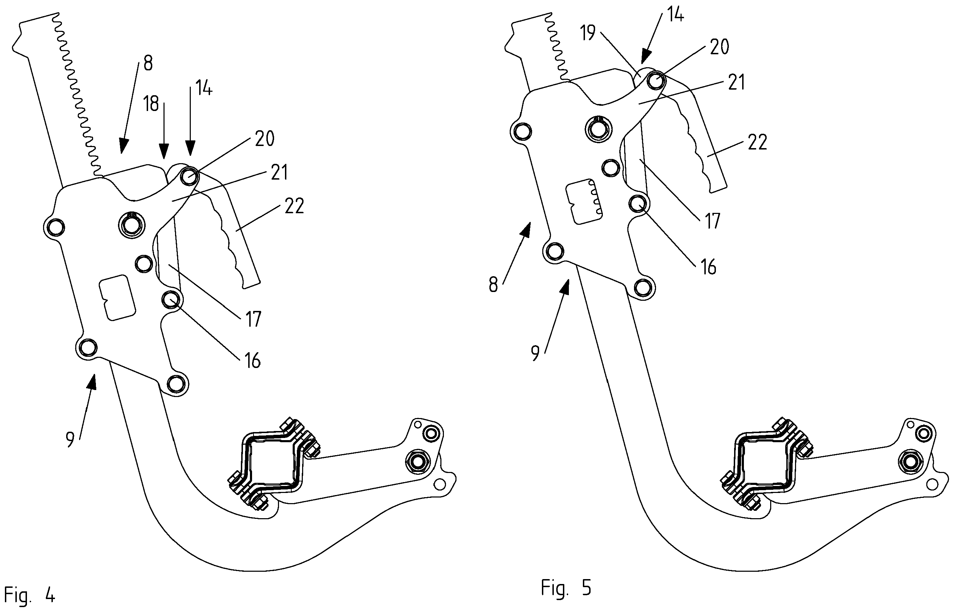

Hierdurch lässt sich die Zahnstange 12 verschieben, wie die Zeichnungen zeigen. Gemäß der Darstellung in Fig.4 ist die Zahnstange 12 hoch geschoben, so dass der Saatstriegel 5 in einer höheren Position eingestellt ist, während gemäß der Darstellung in Fig.5 die Zahnstange 12 und somit der Striegel 5 nach unten verschoben sind.

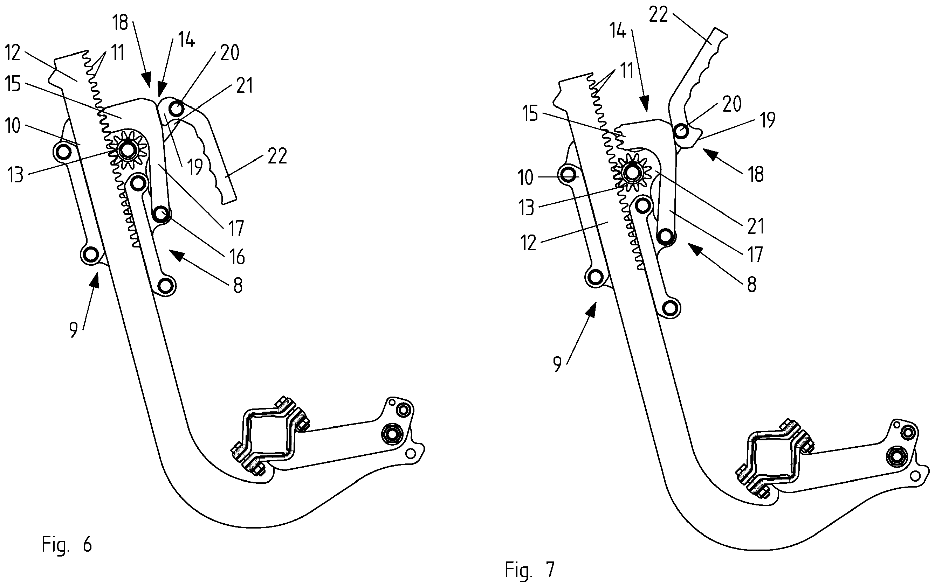

Um die Zahnstange 12 in der jeweils über das Zahnradritzel 13 eingestellten Höhenposition festzusetzen und das Zahnradritzel 13 von den Feststellkräften zu entlasten, ist der Linearführungseinheit 8 eine Verriegelungsvorrichtung 14 zur Festsetzung der Linearführungseinheit 8 zugeordnet. Diese Verriegelungseinrichtung 14 weist ein in ihrer Verriegelungsposition in die zahnartigen Aussparungen 11 eingreifendes zahnartiges Verriegelungselement 15 auf, wie die Fig.6 zeigt. Das zahnartige Verriegelungselement 15 ist an einem mit der Schiebeführung 10 über das Gelenk 16 schwenkbar verbundenem Schwenkhebel 17 angeordnet.

Der Schwenkhebel 17 mit dem zahnartigen Verriegelungselement 15 ist um die Gelenkachse des Gelenkes 16 im begrenzten Umfang verschwenkbar angeordnet. Hierdurch kann der Schwenkhebel 17 zwischen der in Fig.6 dargestellten Verriegelungsposition und in der in Fig.7 dargestellten Entriegelungsposition verschwenken. Der Schwenkhebel 17 wird mittels eines Verriegelungsmechanismus 18 in der in Fig.6 dargestellten Verriegelungsposition gehalten. Der Verriegelungsmechanismus 18 ist ein Exzenter 19 ausgebildet. Der Exzenter 19 ist mittels eines Drehgelenkes 20 an der Seitenplatte 21 der Schiebeführung 10 gehalten.

Dem Exzenter 19 ist ein als Handhebel 22 ausgebildetes Bedienungselement zugeordnet, so dass der Exzenter 19 in die jeweilige Position verdreht werden kann. Mittels des verdrehbaren Exzenters 19 lässt sich der Schwenkhebel 17 verdrehen, um den Schwenkhebel 17 aus der in Fig.7 dargestellten Entriegelungsposition in die in Fig.6 dargestellte Verriegelungsposition zu verschwenken und so die zahnartigen Verriegelungselemente 15 in die zahnartigen Aussparungen 11 der Zahnstange 12 in Verriegelungsposition der Linearführungseinheit 8 zum Eingriff zu bringen.

## Patentansprüche

1. Einstellvorrichtung (8) für eine höhenverstellbare Aufhängung von Bodenbearbeitungswerkzeugen (5) eines zumindest einen Rahmen (7) aufweisenden landwirtschaftlichen Gerätes, wobei die Einstellvorrichtung (8) zumindest eine linear verstellbare Verbindung mit zumindest einer Linearführungseinheit (9) zwischen dem Rahmen (7) und den Bodenbearbeitungswerkzeugen (5) aufweist, wobei die Linearführungseinheit (9) zumindest eine mit zahnartige Aussparungen (11) versehene und in einer Schiebeführung (10) geführte Zahnstange (12) und zumindest ein in die zahnartigen Aussparungen (11) der Zahnstange (12) eingreifendes mittels eines Bedienungsmittels verdrehbares Zahnradritzel (13) aufweist, wobei der Linearführungseinheit (9) zumindest eine Verriegelungsvorrichtung (14) zur Festsetzung der Linearführungseinheit (9) aufweist, **dadurch gekennzeichnet, dass** die Verriegelungseinrichtung (14) zumindest ein in ihrer Verriegelungsposition in die zahnartigen Aussparungen (11) eingreifendes zahnartiges Verriegelungselement (15) aufweist.

2. Einstellvorrichtung (8) nach Anspruch 1, **dadurch gekennzeichnet, dass** das zahnartige Verriegelungselement (15) an einem mit der Schiebeführung (10) schwenkbar verbundenem Schwenkhebel (17) angeordnet ist.

3. Einstellvorrichtung (8) nach zumindest einem der vorstehenden Ansprüchen, **dadurch gekennzeichnet, dass** dem Schwenkhebel (17) ein als mittels eines Bedienungselementes (22) verdrehbarer Exzenter (19) ausgebildeter Verriegelungsmechanismus (18) zum Verbringen des Schwenkhebels (17) zum Eingreifen der zahnartigen Verriegelungselemente (15) in die zahnartigen Aussparungen (11) der Zahnstange (12) in Verriegelungsposition der Linearführungseinheit (8) zugeordnet ist.
